Europäisches Patentamt

European Patent Office

Office européen des brevets

(19)

(11) Numéro de publication: **0 220 123**
**B1**

# (12) FASCICULE DE BREVET EUROPEEN

(45) Date de publication du fascicule du brevet:
**13.12.89**

(51) Int. Cl.⁴: **F16L 37/08**, F17C 13/00
// A61M16/00

(21) Numéro de dépôt: **86402301.5**

(22) Date de dépôt: **15.10.86**

(54) **Dispositif de transfert d'un fluide cryogenique.**

(30) Priorité: **18.10.85 FR 8515460**

(43) Date de publication de la demande:
**29.04.87 Bulletin 87/18**

(45) Mention de la délivrance du brevet:
**13.12.89 Bulletin 89/50**

(84) Etats contractants désignés:
**AT BE CH DE ES FR GB GR IT LI LU NL SE**

(56) Documents cités:
**FR-A- 584 524**
**FR-A- 2 063 957**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cédex 07(FR)**

(72) Inventeur: **Grigoletto, Philippe, 36, avenue de la Garenne, F-77270 Villeparis(FR)**

(74) Mandataire: **Sadones Laurent, Renée et al, L'AIR LIQUIDE 75, quai d'Orsay, F-75321 Paris Cédex 07(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention est relative à un dispositif de transfert d'un fluide cryogénique, du type comprenant deux embouts faisant partie chacun d'un récipient et coopérant par simple enfoncement. Elle s'applique en particulier au transfert d'oxygène liquide d'un récipient de stockage à un récipient portable d'un système d'oxygénothérapie à domicile.

De nombreux systèmes ont été développés pour traiter les insuffisants respiratoires à domicile. Ils comportent un récipient de stockage (par exemple 20 à 40 litres d'oxygène liquide), d'une autonomie d'une à deux semaines, et un récipient portable (par exemple 0,6 à 1,3 litre d'oxygène liquide), d'une autonomie de plusieurs heures. Les deux récipients sont équipés d'embouts de remplissage. Le récipient portable est rempli à partir du récipient de stockage par accouplement de l'embout mâle avec l'embout femelle et mise à l'air du récipient portable. Chaque embout comporte une tête de clapet pourvue d'un ressort de rappel en position de fermeture. L'ouverture de ces clapets est obtenue soit par l'intermédiaire d'ergots prévus sur l'embout mâle et qui viennent se verrouiller sur l'embout femelle (raccords à baïonnette), soit par simple poussée directe des embouts l'un contre l'autre durant tout le temps de remplissage.

Le procédé de remplissage avec raccord à baïonnette présente l'avantage de ne nécessiter qu'un faible effort de verrouillage, mais comporte deux inconvénients :
- le positionnement en vis-à-vis des embouts mâle et femelle est délicat;
- en cas de blocage de l'accouplement par givrage des pièces,
l'utilisateur doit attendre leur réchauffement (5 à 15 minutes) pour pouvoir les déconnecter, ou prendre le risque de détériorer les embouts en forçant.

Le procédé de remplissage par simple enfoncement de l'embout mâle dans l'embout femelle est plus facile à utiliser ; cependant, il nécessite un effort plus important à exercer et ce pendant toute la durée du remplissage, du fait .de l'absence de verrouillage. Par ailleurs se pose également le problème du blocage des raccords par givrage des pièces.

Un dispositif de transfert d'un fluide du type à deux embouts coopérant par enfoncement et comportant un organe de verrouillage est connu par FR-A 584 524.

L'invention a pour but de fournir un dispositif de transfert par simple enfoncement des embouts l'un dans l'autre qui permette à la fois d'éviter le maintien de la poussée pendant le transfert et d'assurer dans tous les cas une séparation fiable et facile des deux embouts lorsque le transfert est terminé.

A cet effet, l'invention a pour objet un dispositif de transfert du type précité, caractérisé en ce qu'il comprend un organe de séparation des deux embouts combiné à un organe de verrouillage de l'accouplement des deux embouts de façon que lorsque l'organe de verrouillage se trouve en position active, l'organe de séparation soit escamoté, et inversement, et un mécanisme articulé commun d'actionnement de l'organe de séparation et de l'organe de verrouillage.

Dans un mode de réalisation particulièrement simple, le mécanisme d'actionnement comprend un levier qui porte l'organe de verrouillage d'un côté de son axe d'articulation, l'organe de séparation étant articulé sur la partie du même levier située de l'autre côté de cet axe.

De préférence, le levier est rappelé élastiquement vers la position active de l'organe de verrouillage, ce dernier présentant une surface de came adaptée pour coopérer avec l'extrémité de l'embout associé pendant l'accouplement des deux embouts.

Un exemple de réalisation de l'invention va maintenant être décrit en regard des dessins annexés, sur lesquels :

- la figure 1 est une vue schématique en élévation latérale d'un dispositif de transfert conforme à l'invention, en position verrouillée;
- la figure 2 est une vue en perspective d'une partie de ce dispositif ; et
- la figure 3 est une vue analogue à la figure 1 illustrant la séparation des deux embouts.

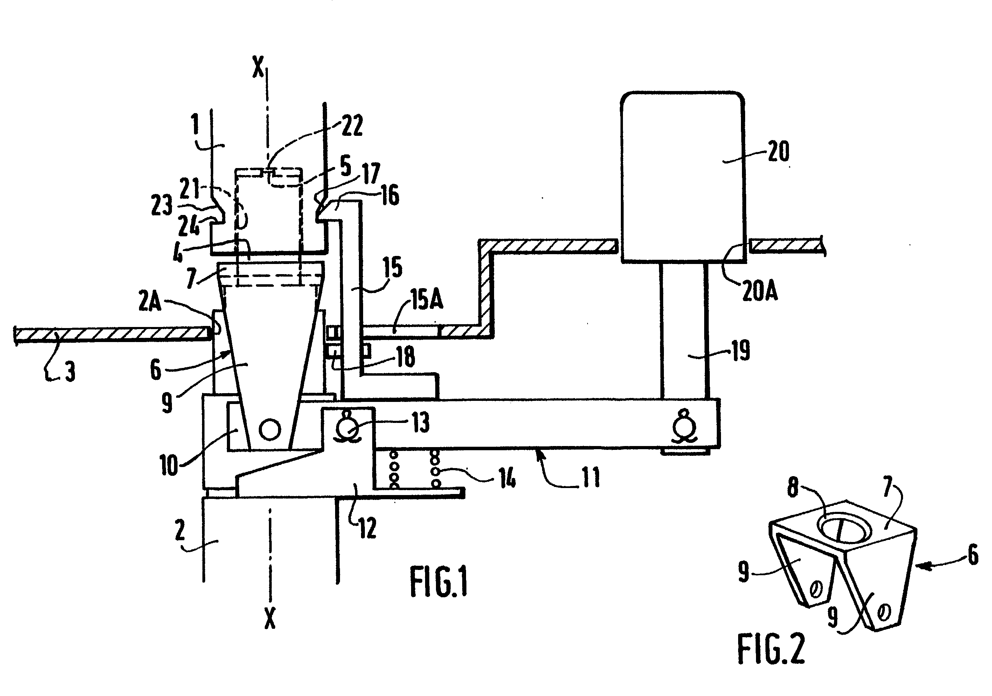

On a représenté partiellement à la figure 1 la partie supérieure d'un récipient de stockage d'oxygène liquide d'une capacité de 20 à 40 litres, ainsi que l'embout de raccordement 1 d'un récipient d'oxygène liquide portable ayant une capacité de 0,6 à 1,3 litre, l'ensemble faisant partie d'un système d'oxygénothérapie à domicile.

Pour ce qui concerne la présente invention, le récipient de stockage comprend essentiellement une tubulure de sortie 2 d'axe vertical X-X qui traverse une ouverture 2A ménagée dans la paroi supérieure 3 du carter du récipient. Cette tubulure 2 se termine, au-dessus de la paroi 3, par un embout mâle cylindrique 4 comportant une tête de clapet 5 en saillie, rappelée vers sa position sortie de fermeture par un ressort (non représenté).

Sur l'embout 4 est enfilée librement une chape de séparation 6. Comme on le voit bien à la figure 2, cette chape comporte une plaque supérieure 7 percée d'un trou circulaire 8 de diamètre légèrement supérieur à celui de l'embout 4 et traversé par celui-ci, et deux ailes latérales 9 dirigées vers le bas. Les extrémités inférieures des deux ailes 9 sont articulées respectivement sur les deux branches d'une fourche 10 formée à une extrémité d'un levier d'actionnement 11 et embrassant la tubulure 2.

Sur la tubulure 2 est fixée une platine 12 qui porte un axe 13 d'articulation de levier 11. A l'opposé de la fourche 10 par rapport à l'axe 13, un ressort de compression 14 est interposé entre la platine 12 et le levier 11, et sur la face supérieure de ce dernier est fixé un crochet de verrouillage 15 qui fait saillie au-dessus de la paroi 13, à travers une fente 15A de cette paroi, et se termine au-dessus de la plaque 7 par un bec 16, lequel présente à son extrémité libre une surface de came supérieure 17 dirigée obliquement. A l'intérieur du carter, le crochet 15 est pourvu d'une butée réglable 18 ; lorsque les embouts 1 et 4 ne sont pas en prise, cette butée maintient le levier 11 en position à peu près horizontale et le crochet 15 en position à peu près verticale, avec la face inférieure du bec 16 à peu près horizontale. Sur l'extrémité du levier 11 opposée à la chape 6 est articulée une tige 19 qui porte un bouton-poussoir 20 guidé à travers une ouverture 20A de la paroi 3.

L'embout 1 est un embout femelle cylindrique présentant un alésage borgne 21 conjugué de l'embout 4 et dont le fond est équipé d'une tête de clapet 22 rappelée par un ressort (non représenté) vers sa position sortie de fermeture. Par ailleurs, une gorge circulaire 23 est usinée sur la surface extérieure de l'embout 1, près de son extrémité inférieure, et présente une face inférieure 24 perpendiculaire à l'axe de cet embout.

Pour effectuer un transfert d'oxygène liquide du récipient de stockage dans le récipient portable, on amène l'embout 1 au-dessus de l'embout 4, et on l'abaisse suivant l'axe X-X, avec une orientation angulaire quelconque. L'alésage 21 s'emboite sur l'embout 4 ; son arête d'extrémité vient au contact de la surface de came 17 du crochet 15 et repousse ce dernier à l'encontre du ressort 14, puis le bec 16 vient s'encliqueter, sous l'action de ce ressort, dans la gorge 23. Les deux têtes de clapet 5 et 22 sont alors enfoncées et ouvertes, ce qui autorise le transfert de l'oxygène liquide, et leurs ressorts exercent une force qui tend à séparer les deux embouts. L'ensemble est donc fermement verrouillé par le crochet 15, et l'utilisateur peut lâcher le récipient portable sans que le transfert d'oxygène liquide risque de s'interrompre. Dans cette position, représentée à la figure 1, la face d'extrémité inférieure de l'embout 1 se trouve à une petite distance au-dessus de la plaque 7 de la chape 6.

Lorsque le transfert d'oxygène liquide est terminé, l'utilisateur presse le bouton 20 et fait ainsi basculer le levier 11 dans le sens horaire (en considérant les figures 1 et 2) à l'encontre du ressort 14. Ceci provoque d'abord la sortie du bec 16 hors de la gorge 3, et donc le déverrouillage de l'accouplement des deux embouts.

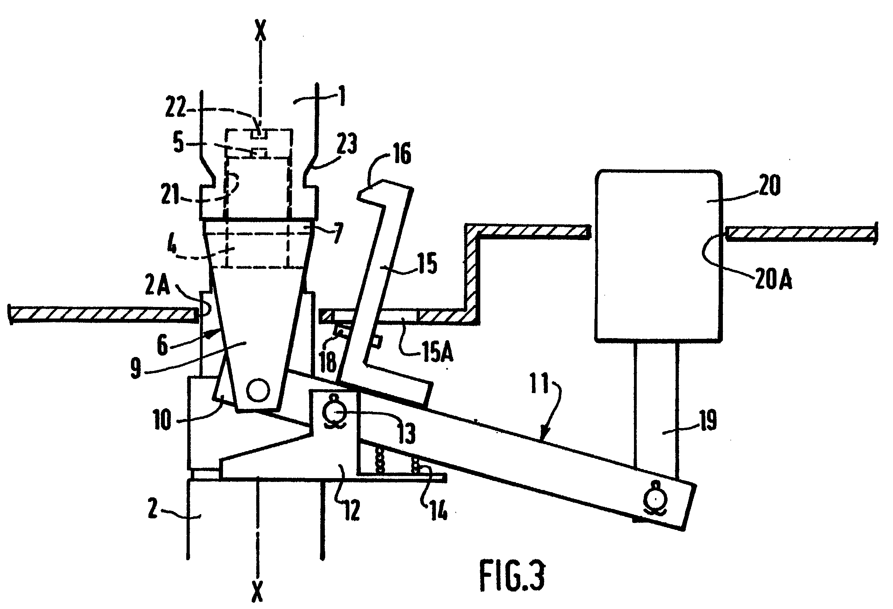

En l'absence de givrage, les deux embouts se séparent alors sans difficulté par simple soulèvement du récipient portable, le début de la séparation étant assuré par les ressorts de rappel des deux têtes de clapet 5 et 22. Si par contre un givrage s'est produit et bloque la séparation des deux embouts, il suffit de presser plus à fond le bouton 20 ; la plaque 7 de la chape 6 vient alors au contact de la face d'extrémité inférieure de l'embout 1 et repousse facilement ce dernier vers le haut, avec une force multipliée par la différence de longueur des deux bras du levier 11. On arrive ainsi à la position illustrée à la figure 3, et l'on peut alors soulever sans difficulté le réservoir portable.

## Revendications

1. - Dispositif de transfert d'un fluide cryogénique, du type comprenant deux embouts (1,4) faisant partie chacun d'un récipient et coopérant pas simple enfoncement, caractérisé en ce qu'il comprend un organe (6) de séparation des deux embouts combiné à un organe (15) de verrouillage de l'accouplement des deux embouts de façon que lorsque l'organe de verrouillage (15) se trouve en position active, l'organe de séparation (6) soit escamoté, et inversement, et un mécanisme articulé commun (11, 19, 20) d'actionnement de l'organe de séparation (6) et de l'organe de verrouillage (15).

2. - Dispositif suivant la revendication 1, caractérisé en ce que l'organe de séparation (6) est adapté pour coulisser le long d'un premier embout (4) et pour venir prendre appui sur la face d'extrémité de l'autre embout (1) lorsqu'il est actionné vers sa position active.

3. - Dispositif suivant la revendication 2, caractérisé en ce que l'organe de séparation (6) comprend une plaque perforée (7) enfilée sur ledit premier embout (4).

4. - Dispositif suivant l'une quelconque des revendications 1 à 3, caractérisé en ce que l'organe de verrouillage (15) comprend un crochet porté par l'un des récipients et adapté pour venir en prise avec un évidement périphérique (23), de préférence une gorge circulaire, de l'embout (1) de l'autre récipient.

5. - Dispositif suivant la revendication 4, caractérisé en ce que le mécanisme d'actionnement (11, 19, 20) comprend un levier (11) qui porte l'organe de verrouillage (15) d'un côté de son axe d'articulation (13), l'organe de séparation (6) étant articulé sur la partie du même levier (11) située de l'autre côté de cet axe.

6. - Dispositif suivant la revendication 5, caractérisé en ce que, à son extrémité opposée à l'organe de séparation (6), le levier (11) porte un bouton-poussoir (20).

7. - Dispositif suivant l'une des revendications 5 et 6, caractérisé en ce que le levier (11) est rappelé élastiquement vers la position active de l'organe de verrouillage (15), ce dernier présentant une surface de came (17) adaptée pour coopérer avec l'extrémité dudit autre embout (1) pendant l'accouplement des deux embouts (1, 4).

8. - Dispositif suivant la revendication 7, caractérisé en ce que l'organe de verrouillage (15) porte une butée (18) adaptée pour prendre appui sur ledit premier embout (4) lorsque les deux embouts (1, 4) sont séparés.

9. - Dispositif suivant l'une quelconque des revendications 1 à 8, caractérisé en ce que le mécanisme d'actionnement (11, 19, 20) est adapté pour libérer l'organe de verrouillage (15) avant que l'organe de séparation (6) exerce une poussée tendant à séparer les deux embouts (1,4).

## Patentansprüche

1. Vorrichtung zum Umfüllen von Tiefsttemperaturflüssigkeit, mit zwei Ansatzstücken (1, 4), die an jeweils einem Behälter angebracht sind und durch bloßes Ineinanderstecken zusammenwirken, dadurch gekennzeichnet, daß sie ein Organ (6) zum Trennen der beiden Ansatzstücke in Verbindung mit einem Organ (15) zum Verriegeln der Kupplung der beiden Ansatzstücke aufweist, wobei, wenn das Verriegelungsorgan (15) sich in Wirkstellung befindet, das Trennorgan (6) zurückgenommen ist, und umgekehrt, sowie eine schwenkbare zusammengesetzte Einrichtung (11, 19, 20) zum Betätigen des Trennorgans (6) und des Verriegelungsorgans (15).

2. Vorrichtung gemäß Anspruch 1, dadurch gekennzeichnet, daß das Trennorgan (6) an einem ersten Ansatzstück (4) entlanglaufen kann und sich gegen die Endfläche des anderen Ansatzstücks (1) legen kann, wenn es in seine Wirkstellung gebracht wird.

3. Vorrichtung nach Anspruch 2, dadurch gekennzeichnet, daß das Trennorgan (6) eine über das genannte erste Ansatzstück (4) geführte, mit einer Öffnung versehene Platte (7) aufweist.

4. Vorrichtung nach einem der Ansprüche 1 bis 3, dadurch gekennzeichnet, daß das Verriegelungsorgan (15) einen Haken umfaßt, der von dem einen Behälter getragen wird und mit einer um den Umfang geführten Ausnehmung (23), vorzugsweise einer Ringnut, an dem Ansatzstück (1) des anderen Behälters in Eingriff bringbar ist.

5. Vorrichtung nach Anspruch 4, dadurch gekennzeichnet, daß die Betätigungseinrichtung (11, 19, 20) einen Hebel (11) umfaßt, der das Verriegelungsorgan (15) auf der einen Seite seiner Drehachse (13) trägt, während das Trennorgan (6) an den Teil dieses Hebels (11) angelenkt ist, der sich auf der anderen Seite dieser Achse befindet.

6. Vorrichtung nach Anspruch 5, dadurch gekennzeichnet, daß der Hebel (11) an seinem dem Trennoran (6) abgewandten Ende eine Drucktaste (20) trägt.

7. Vorrichtung nach einem der Ansprüche 5 und 6, dadurch gekennzeichnet, daß der Hebel (11) federnd in die Wirkstellung des Verriegelungsorgans (15) zurückführbar ist, welches eine Nockenfläche (17) aufweist, die mit dem Ende des genannten anderen Ansatzstücks (1) während der Kupplung der beiden Ansatzstücke (1, 4) zusammenzuwirken vermag.

8. Vorrichtung nach Anspruch 7, dadurch gekennzeichnet, daß das Verriegelungsorgan (15) einen Anschlag (18) trägt, der sich an dem genannten ersten Ansatzstück (4) abzustützen vermag, wenn die beiden Ansatzstücke (1, 4) getrennt sind.

9. Vorrichtung nach einem der Ansprüche 1 bis 8, dadurch gekennzeichnet, daß die Betätigungseinrichtung (11, 19, 20) das Verriegelungsorgan (15) freizugeben vermag, bevor das Trennorgan (6) eine Druckkraft ausübt, die die beiden Ansatzstücke (1, 4) zu trennen sucht.

## Claims

1. A device for transferring a cryogenic fluid of the type comprising two end members (1, 4) each forming part of a container and co-operating by simple pushing in, characterized in that it comprises an element (6) for separation of the two end members combined with an element (15) for locking the coupling of the two end members in such a way that when the locking element (15) is in an active position, the separating element (6) is retracted, and vice-versa, and a common articulated mechanism (11, 19, 20) for actuating the separating element (6) and the locking element (15).

2. A device according to claim 1, characterized in that the separating element (6) is adapted to slide along a first end member (4) and to bear against the end face of the other end member (1) when it is pushed towards its active position.

3. A device according to claim 2, characterized in that the separating element (6) comprises an apertured plate (7) placed around the said first end member (4).

4. A device according to any one of claims 1 to 3, characterized in that the locking element (15) comprises a hook carried by one of the containers and adapted to come into engagement with a peripheral recess (23), preferably a circular groove, of the end member (1) of the other container.

5. A device according to claim 4, characterized in that the actuating mechanism (11, 19, 20) comprises a lever (11) which carries the locking element (15) on one side of its pivot axis (13), the separating element (6) being hingedly mounted on the part of the same lever (11) located on the other side of this axis.

6. A device according to claim 5, characterized in that at its end opposite to the separating element (6), the lever (11) carries a push-button (20).

7. A device according to one of claims 5 and 6, characterized in that the lever (11) is resiliently biassed back towards the active position of the locking element (15), this latter having a cam surface (17) adapted to co-operate with the end of the said other end member (1) during the coupling of the two end members (1, 4).

8. A device according to claim 7, characterized in that the locking element (15) carries a stop (18) adapted to bear against the said first end member (4) when the two end members (1, 4) are separated.

9. A device according to any one of claims 1 to 8, characterized in that the actuating mechanism (11, 19, 20) is adapted to release the locking element (15) before the separating element (6) exerts a thrust tending to separate the two end members (1, 4).

FIG.1

FIG.2

EP 0 220 123 B1

FIG.3